Europäisches Patentamt

European Patent Office

Office européen des brevets

(19)

(11) EP 0 832 468 B1

(12) EUROPEAN PATENT SPECIFICATION

(45) Date of publication and mention
of the grant of the patent:
08.03.2000 Bulletin 2000/10

(51) Int Cl.⁷: G06T 5/00

(86) International application number:
PCT/GB96/01347

(21) Application number: 96917558.7

(22) Date of filing: 07.06.1996

(87) International publication number:
WO 96/42070 (27.12.1996 Gazette 1996/56)

(54) **APPARATUS FOR IMAGE ENHANCEMENT, AND RELATED METHOD**

VERFAHREN UND VORRICHTUNG ZUR BILDERZEUGUNG

DISPOSITIF DESTINE A AMELIORER UNE IMAGE ET PROCEDE ASSOCIE

(84) Designated Contracting States:
DE FR GB NL

(30) Priority: 13.06.1995 GB 9512012

(43) Date of publication of application:
01.04.1998 Bulletin 1998/14

(73) Proprietor: BTG INTERNATIONAL LIMITED
London EC4M 7SB (GB)

(72) Inventors:
• BRAMMER, Michael, John
London SW4 8AE (GB)
• BULLMORE, Edward, Thomas
London NW1 8TU (GB)
• EVERITT, Brian, Sydney
London SE19 1XA (GB)

(74) Representative: Buttrick, Richard
BTG International Limited,
10 Fleet Place
London EC4M 7SB (GB)

(56) References cited:
EP-A- 0 614 153        US-A- 5 412 563

• 1995 NUCLEAR SCIENCE SYMPOSIUM AND
MEDICAL IMAGING (NSS/MIC), SAN
FRANCISCO, CA, USA, 21-28 OCT. 1995, vol. 43,
no. 3, pt.2, ISSN 0018-9499, IEEE
TRANSACTIONS ON NUCLEAR SCIENCE, JUNE
1996, IEEE, USA, pages 2030-2036, XP000601325
SINGH M ET AL: "Segmentation of functional
MRI by K-means clustering"
• JOURNAL OF COMPUTER ASSISTED
TOMOGRAPHY, NOV.-DEC. 1990, USA, vol. 14,
no. 6, ISSN 0363-8715, pages 1037-1045,
XP000601360 CLINE H E ET AL:
"Three-dimensional segmentation of MR images
of the head using probability and connectivity"
• JOURNAL OF COMPUTER ASSISTED
TOMOGRAPHY, MARCH-APRIL 1996,
LIPPINCOTT-RAVEN PUBLISHERS, USA, vol.
20, no. 2, ISSN 0363-8715, pages 206-218,
XP000601244 RAJAPAKSE J C ET AL: "Cerebral
magnetic resonance image segmentation using
data fusion"

EP 0 832 468 B1

**Description**

This invention relates to an apparatus for image enhancement, and related method.

The invention is particularly, though not exclusively, suitable for enhancing images obtained from Magnetic Resonance Images (MRI). It will be appreciated however, that the apparatus and/or method may be adapted for use with other imaging devices or methods, for example, Charge Coupled Devices (CCD) or to enhance images obtained from digital imaging techniques.

A problem suffered by imaging equipment has been that an image obtained has often suffered from fuzziness, especially at or around edges of objects to be imaged. This fuzziness is usually attributable to limitations in resolution of an imaging technique. Thus an inherent limitation exists and errors occur when determining the nature of an image which consists of different elements, materials or tissue types. In particular it is likely that at least some elements in a digital image of an object consisting of a number of tissue types or classes will be representative of more than one tissue type. Hereinafter the term tissue type will be used to describe all of these.

In particular these errors occur when boundaries or edges are determined, at around an interface between a first and second tissue type. This error is known as partial volume artefact in an MRI of, for example, brain tissue. In the past a decision has been required to determine whether a pixel of an image, falls into a first or second tissue type category. Often the best way to perform this is by eye by a skilled person with experience in interpreting the particular image. The skilled person might be a Cartographer or a Radiographer, depending on the image to be interpreted. The human eye naturally combines and integrates, so as to provide a subjective evaluation of the image. However, such a method does not lend itself to rapid interpretation of a large number of images; and because it is subjective, one person's interpretation of an image may vary greatly from another's.

Techniques were developed to automate interpretation of images to assist with tissue determination. These techniques generally involved a method which attributed a grey-scale value to a pixel and when a pre-determined threshold value was exceeded, a boundary pixel value was accorded to that pixel. An example of one such technique is disclosed in US Patent US-A-4764971. US Patent 4,764,971 describes a method of image segmentation, but does not deal with multispectral or multivariate images and does not use any form of discriminant analysis, or morphological processing to make a brain tissue classification.

Another technique is described in US-A-4991092, which describes a method of image contrast enhancement applied to magnetic resonance (MR) image data, presumably for use prior to visual inspection of an image. A method of forming partitioned images, is described, in which each pixel is assigned a given partition value in the light of its $T_1$, $T_2$ and PD weighted signal intensity values. This is a multivariate method of treatment of MR data but it does not involve prior definition of "training regions" or subsequent application of discriminant analysis. The Figures appear to show partitioned images which seem to have been contrast enhanced with respect to original data, but do not seem plausible as maps of the three main brain tissue types namely white matter, grey matter and cerebro-spinal fluid (CSF).

Both the aforementioned US Patents employ a statistical technique which assume a normal distribution of signal intensity value within each tissue class. The present invention arose from an investigation into the effectiveness of this assumption and related technique; and the inventors discovered that the distribution was in fact not normal (i. e. not Gaussian) distribution. It was thus realised that the techniques hitherto used suffered from an inherent error, based upon and arising from, the false assumption that the class conditional distribution of signal intensity values was normal or Gaussian.

In particular with brain tissue imaging, because it involves finite, spatial resolution of digital magnetic resonance images (MRI's) of the brain, and due to the complexity of anatomical interfaces between brain regions of different tissue type, it is inevitable that some pixels will represent a mixture of two or three different tissue types. Outright assignment of such "bipartial" or "tripartial" volume pixels to one class or another is more problematic than assignment of "full volume" pixels, wholly representative of a single tissue type.

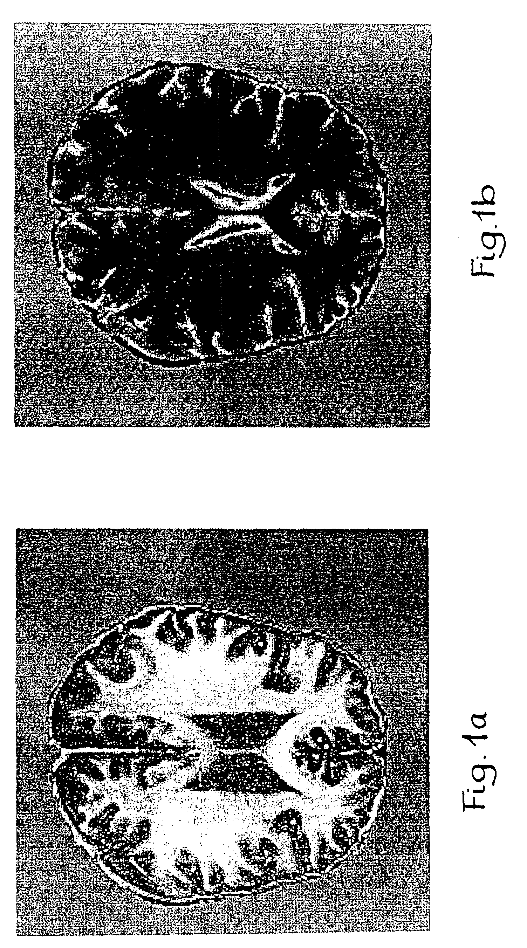

In view of the facility of visual segmentation, it is natural to expect that the eye and hand of an expert human operator might be adaptable to the task of explicitly defining Regions of Interest (ROI's), such as the cerebral cortex or ventricular system, by directly tracing their boundaries onto the image. In favour of this unautomated approach to image segmentation, the eye is typically able to distinguish "noisy" fluctuations in grey level values (such as may be due to inhomogeneities in the static magnetic field or radiofrequency pulse used to acquire the images) from "real" fluctuations attributable to transition between different tissue types ("Three-Dimensional Segmentation of MR Images of the Head using Probability and Connectivity", Journal of Computer Assisted Tomography, pages 1037-1045, November/December 1990, Cline *et al.*). The expert operator is also able to discriminate regions, such as frontal and parietal cortex, which are difficult to disentangle automatically if they are represented, as they are in Figure 1a, by a single connected ribbon of pixels with a unimodal distribution of grey level values.

However, the arguments against manual segmentation are overwhelming: it is tedious, time consuming, and susceptible to operator bias and error. For these reasons several research groups have attempted to develop more automated methodologies. These techniques may be broadly subdivided into "univariate" methods, which assign each pixel in the image to one of two or more classes of tissue based on a single grey level or intensity value per pixel; and potentially "multivariate" methods, which are designed to classify each pixel based on more than one signal intensity value per pixel.

The earliest univariate method to be applied, following in the footsteps of previous work on automated segmentation of computed tomography (CT) images, was histogram partition or thresholding. To do this, a range of grey level values is arbitrarily defined and all pixels with grey level values within that range are assigned to one class, while all other pixels are assigned to another class. This would be adequate if the distribution of grey level values in the whole image was truly multimodal; in other words, if all pixels representing a given tissue type shared a Normal (Gaussian) distribution of intensity values which was parametrically consistent for that tissue type despite variation in subjects and scanners, and did not substantially overlap the Normal distributions of intensity values for pixels representing other tissue types. However, this assumption does not necessarily hold true for brain MRIs, largely because of the problem of partial volume artefact. Definition of the optimal intensity range for thresholding may consequently be problematic.

Region-growing algorithms have been developed to allow the operator to adjust the initial minimum and maximum thresholds until a continuous boundary enclosing all pixels within the thresholded range approximates to his or her perception of where the regional boundary lies in the image (eg: the AUTOTRACE function in the ANALYZE (Trade Mark) package of image processing software; Robb & Barillot 1989). However, this reintroduces many of the problems with manual segmentation already noted, in particular it may take up to 7 hours to segment a single scan. Alternatively, one can compute *relative* grey level values, or differential intensities, between a single reference pixel interactively identified within a ROI and all other pixels in the image. Contour lines enclosing all pixels with differential intensities arbitrarily close to zero may then be automatically generated and refined by application of a Sobel edge enhancement operator, which detects the pixel locations of greatest local change in differential intensity ("Magnetic Resonance Technology in Human Brain Science : Blueprint for a Program Based upon Morphometry", Official Journal of the Japanese Society of child Neurology, Caviness *et al.* 1989; "Anatomic Segmentation and Volumetric Calculations in Nuclear Magnetic Resonance Imaging", IEEE Transactions on Medical Imaging, vol. 8, no. 1, March 1989, pages 1-7, Kennedy *et al.*). Yet as "Analysis of Brain and Cerebrospinal Fluid Volumes with MR Imaging : Part I. Methods, Reliability, and Validation", Radiology, vol. 178, no. 1, January 1991, pages 115-122, Kohn *et al.* have shown, any univariate approach to segmentation is likely to yield misclassification rates in excess of those obtained when there is more than one signal intensity variable per pixel, and most recent work has tended to favour multivariate or multispectral methodologies.

Multivariate classification requires that at least two exactly registered images, each representing the intensity of a different component of the MR signal at an identical set of intracranial locations, are available in place of the single image acceptable for univariate thresholding. In theory it would be possible to use co-registered images acquired with any pair of scanning sequences, or to use co-registered images acquired with more than two scanning sequences. However, to date the most popular choice has been a pair of proton density (PD) weighted and $T_2$ weighted images acquired by a multiple echo sequence. Since the PD and $T_2$ weighted images can be acquired almost simultaneously, the possible contribution of movement artefact is minimised and it may be assumed that the images represent different signal intensity values or "features" for the same anatomical loci. The question is then how to find the best possible partition of the two dimensional feature space into two or more mutually exclusive subregions, each of which corresponds to the bivariate characteristics of a single tissue type. A variety of possible answers to this question have been proposed.

Kohn *et al.* (1991) plotted 2-dimensional scatterplots for a representative sample of pixels, identified two main clusters corresponding to brain and CSF, and defined the optimum partition line as one drawn midway between the bivariate means of the two clusters and parallel to the main axis of the ellipsoid brain cluster. "Brain Magnetic Resonance Imaging : Approaches for Investigating Schizophrenia", Schizophrenia Bulletin, vol. 16, no. 3, pages 453-476, Pfefferbaum *et al.* (1990) used image arithmetic to generate composite images which maximised contrast between tissue compartments. They found that subtraction of a $T_2$ weighted image from a PD weighted image enhanced contrast between brain parenchyma and CSF, and addition of a $T_2$ weighted image to a PD weighted image enhanced contrast within brain parenchyma between grey matter and white matter. Pixels were ultimately assigned to one of these three classes by a conventional thresholding operation on the two composite images.

Cline *et al.* (1990) used a more formally specified statistical model, assuming that within each tissue class the probability distribution of PD and $T_2$ weighted intensity values was bivariate Normal. They estimated the parameters of these distributions (5 parameters per class) for 4 tissue classes, computed the probability of each pixel in the image belonging to each of the 4 distributions, and assigned each pixel to the class for which its probability of membership was greatest. Similarly, "Methods for Measuring Brain Morphologic Features on Magnetic Resonance Images : Validation and Normal Aging", Arch Neurol, vol. 47, January 1990, pages 27-32, Jernigan *et al.* used pairwise linear discriminant functions to allocate pixels to one of four tissue classes; and "Segmentation Techniques for the Classification of Brain Tissue using Magnetic Resonance Imaging", Psychiatry Research: Neuroimaging, vol. 45, pages 33-51, Cohen *et al.* (1992) described canonical discriminant analysis to allocate pixels to one of three tissue classes, and reported that this yielded segmented images of superior quality to those obtained by thresholding or image arithmetic operations.

Both these latter approaches implicitly share Cline *et al's* (1990) assumption that the class-conditional probability distributions of PD and $T_2$ weighted intensity values are multivariate Normal. All three studies may therefore be regarded as examples of fully parametric, Normal theory based linear discriminant analysis (NLDA).

According to the present invention there is provided imaging apparatus comprising: means for obtaining an image, which image comprises a plurality of pixels, means for converting said image into machine-readable data such that the data is representative of said pixels; means for according relative values to each of said data; characterised in that means is provided for performing a logistic discriminant analysis of said data, such that estimates of a logistic regression coefficient may be obtained, said logistic regression coefficient being used to estimate the probability of whether a pixel is of a first class type or second class type.

Preferably classification of multi-echo MRI's, which use a polychotomous logistic model for discriminant analysis, may be combined with a Bayes allocation rule, incorporating differential prior probabilities, and spatial connectivity tests, in order to assign each pixel in the image to one of four possible classes. Classes may be of any different tissue type but are preferably grey matter, white matter, cerebrospinal fluid (CSF) and unclassified.

Preferably the two characteristics which are related are the proton density (PD) map and the $T_2$ weighted signal intensity, of human tissue. Similarly more than two characteristics observed at any single pixel may be the basis for classification by this method.

According to a further aspect of the present invention there is provided a method of obtaining an image, which image comprises a plurality of pixels, the method comprises the steps of converting an image into machine-readable data such that the data is representative of the pixels in the image, according relative values to each of said data, characterised in that a logistic discriminant analysis is applied to the data, such that an estimate of a logistic regression coefficient is obtained, said logistic regression coefficient being used to estimate the probability of whether a pixel is of a first class type or a second class type.

The apparatus and method of the invention enable automated volumetric analysis of segmented images, with low operational overheads. The method compares favourably with previous multivariate or "multispectral" approaches to brain MRI segmentation; in particular in terms of inter-rater reliability (intra class correlation coefficients for all 3 tissue classes greater than 0.9 misclassification rate), and validity (misclassification rate = 3.3%). These gains in reliability and validity result from improved methodological management of the related problems of non-Gaussian distribution of MRI signal intensity values and partial volume artefact.

Magnetic resonance images (MRI's) of the brain are immediately interesting to many neuroscientists and clinicians because they seem so natural to decipher anatomically. For example, the trained eye finds it virtually effortless to see Figure 1a in terms of a convoluted mantle of cerebral cortex overlying a dendritically branched white matter core; or to see Figure 1b as mainly a map of cerebrospinal fluid (CSF) in the ventricular and sulcal spaces. The human visual apparatus achieves this rapid anatomical classification presumably by integrating the spatial pattern of colour coded signal intensity values in the raw image data with *a priori* expectations of cerebral structure. Unfortunately, the results of such visual segmentation, though subjectively plausible, are necessarily qualitative, prone to an indeterminate degree of observer bias, and difficult to communicate precisely or to compare automatically between scans. The anatomical regions of interest (ROIs) discerned at a glance must be more explicitly defined prior to formal morphometry or quantification of regional structure and the present invention enables this.

Moreover, means may be provided for storing images in, for example, a machine readable form such that a comparison between two images of the same object can be performed automatically. An algorithm may be used to ensure co-registration of two or more images so as to enable comparison of the images. This may be performed digitally by comparing respective representational matrices or optically, by using an optical processor, such as, for example, spatial light modulator (SLM). Such a comparison enables for example a clinician to determine automatically any degradation or change in tissue type. Such comparison may even be performed remotely, for example by accessing a database. Alternatively other types of images may be compared, for example satellite images, thereby permitting analysis of land use.

It was with the above in mind, that the inventors were led to consider developing a logistic model for discriminant analysis of multiecho MR images of the brain. The approach was theoretically more appropriate because it was realised that the class conditional distributions of MR signal intensity values may not always justify an assumption of multivariate Normality.

A preferred embodiment of the apparatus and method for carrying out the invention will now be described, by way of example only, and with reference to the Figures, in which:

Figure 1 shows a representative pair of dual-echo magnetic resonance images of the mid-cerebrum in the axial plane;
Figure 1a is of a proton density (PD) weighted image acquired at short echo time (19 msec);
Figure 1b is of a $T_2$-weighted image acquired at longer echo time (95 msec);
Figure 2 shows a Scatterplot of T2-weighted signal intensity values *versus* PD-weighted signal intensity values for a training set of 2836 pixels sampled from grey matter, white matter, and CSF regions of the images in Figure 1; point markers indicate tissue type: solid circle = grey matter; open circle = white matter; dot = CSF;

Figures 3a to 9c show Chi-squared quantile plots of ranked generalised distance statistic, Z, for each of the tissue classes represented;

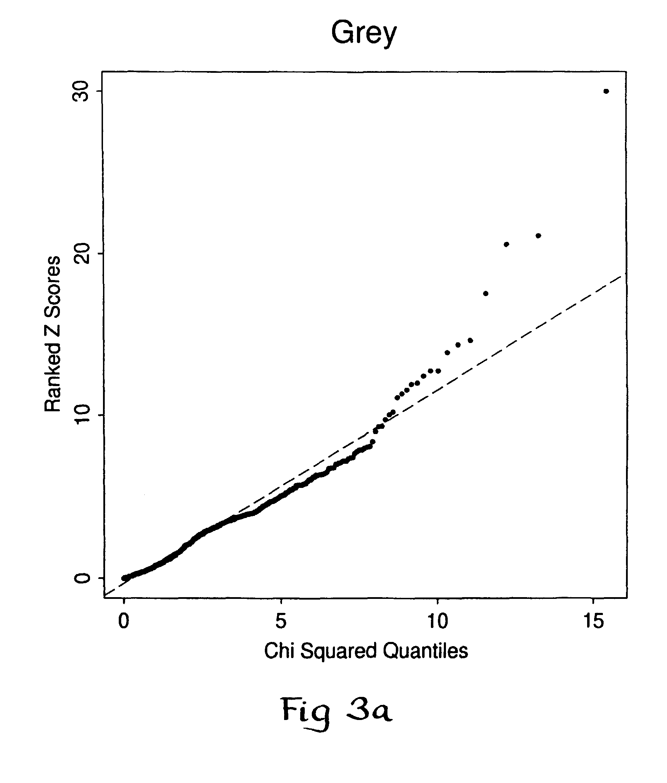

Figure 3a is of grey matter;

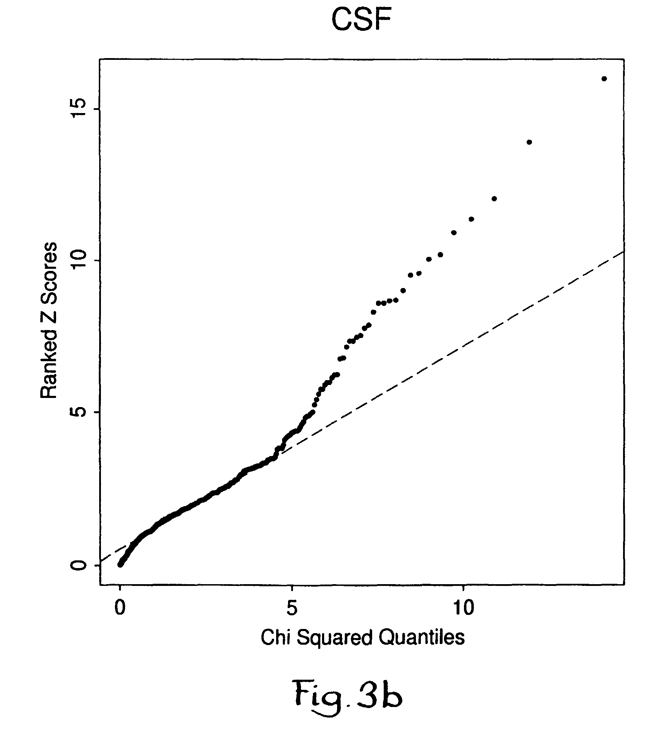

Figure 3b is of CSF;

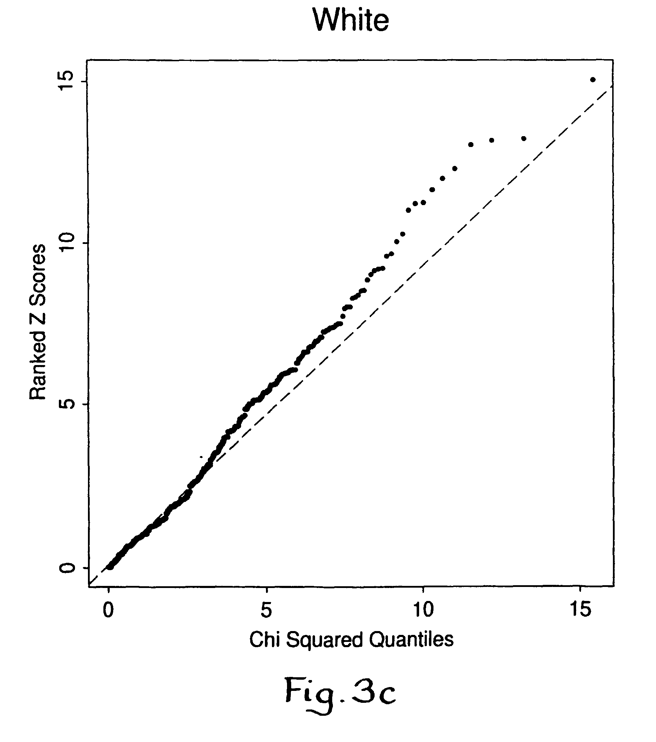

Figure 3c is of white matter;

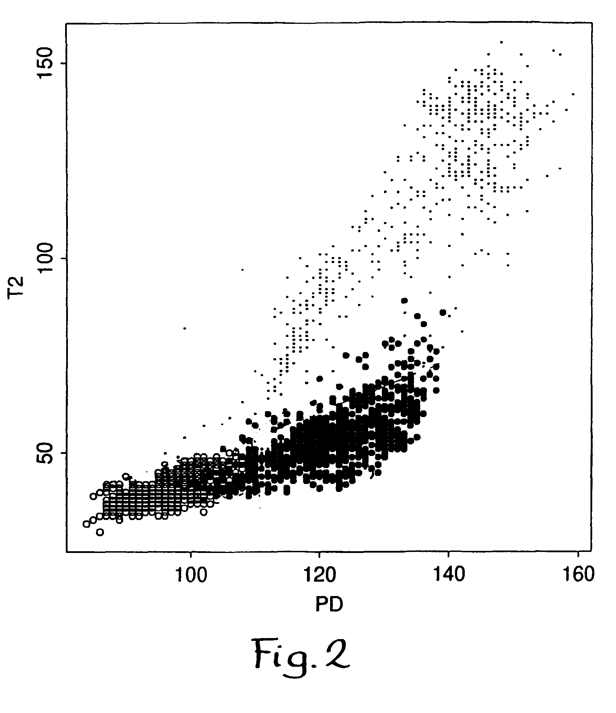

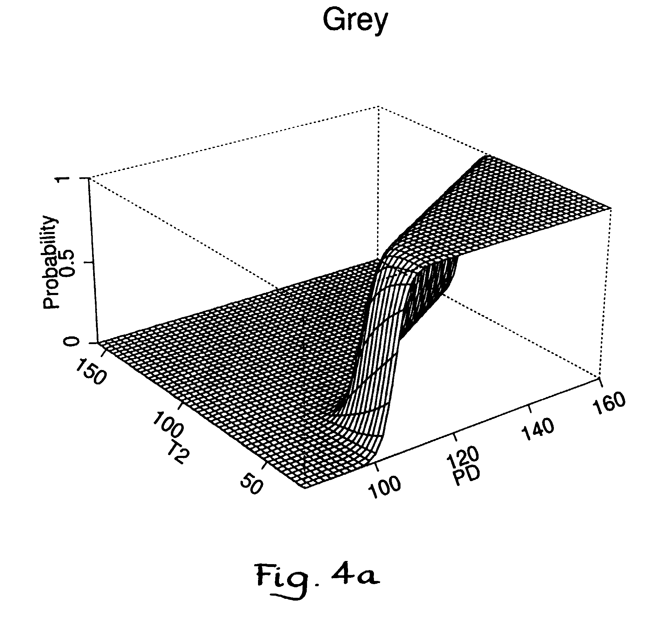

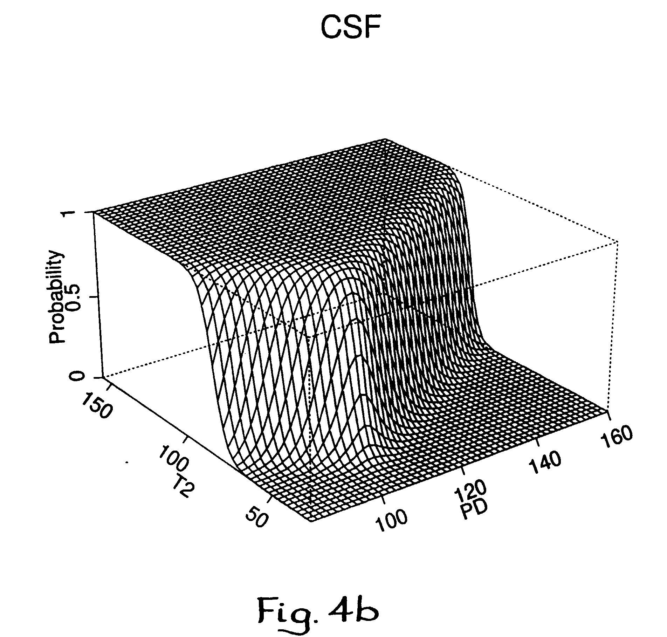

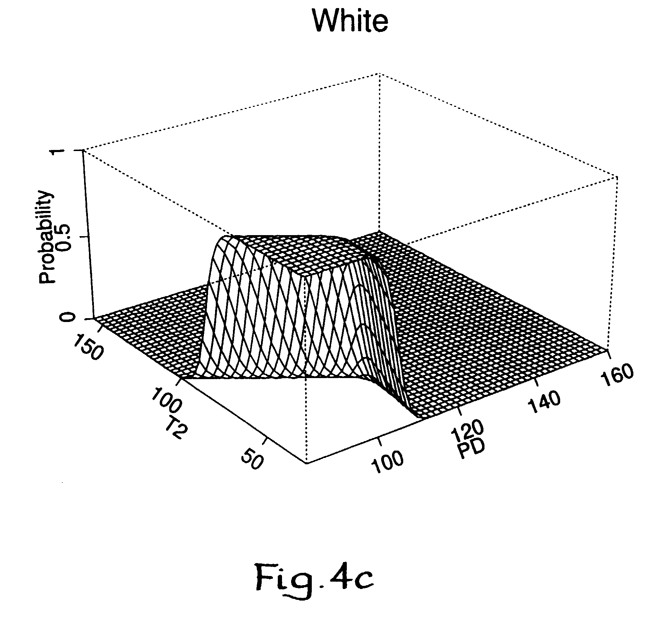

Figures 4a, b and c are graphs of probabilities of each tissue class membership derived from a polychotomous logistic model, with values for $\beta$ coefficients estimated by maximum likelihood from data in Figure 2;

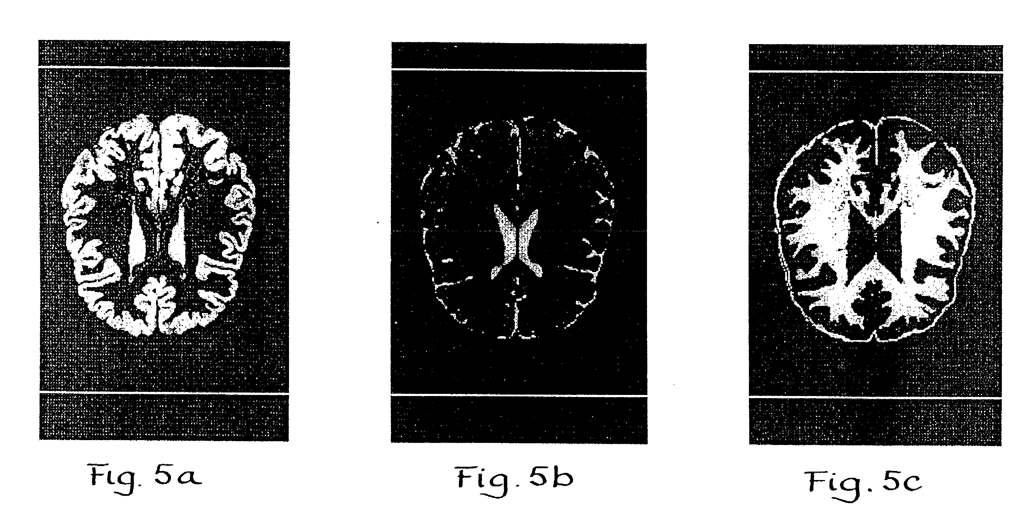

Figures 5a, b and c show images of data derived probabilities of each tissue class membership for each pixel in the representative image, in which probabilities approaching 1 are indicated by solid white pixels; probabilities approaching zero are indicated by "transparent" pixels, (i.e. the same colour as the background); and probabilities of intermediate value are indicated by black or grey pixels;

Figure 5a is in respect of grey matter;

Figure 5b is in respect of CSF;

Figure 5c is in respect of white matter.

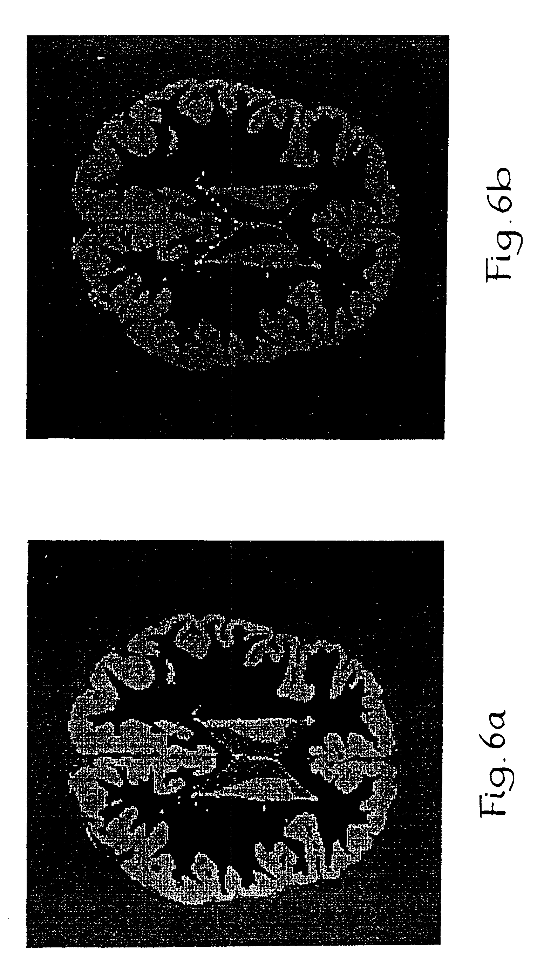

Figure 6 shows a representative image classified by two different allocation rules;

Figure 6a shows an image which has been segmented into three possible classes by a likelihood ratio rule;

Figure 6b shows an image which has been segmented into four possible classes by a Bayes allocation rule with differential prior probabilities for tissue class membership;

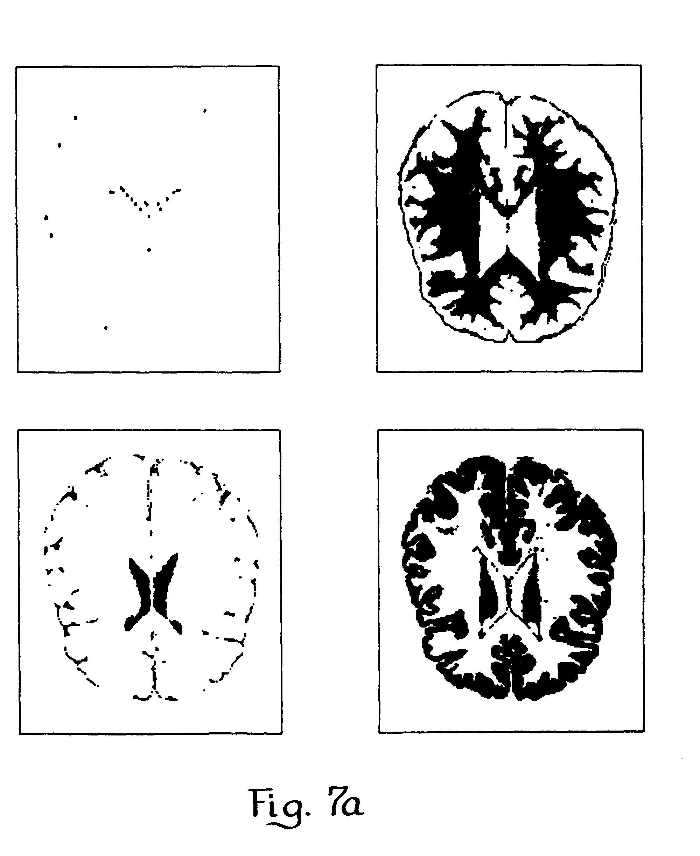

Figure 7a show four binary maps of pixels assigned to one of four classes by the Bayes allocation rule, the top left image is unclassified; the top right is for white matter; the bottom left is for CSF; the bottom right is for grey matter;

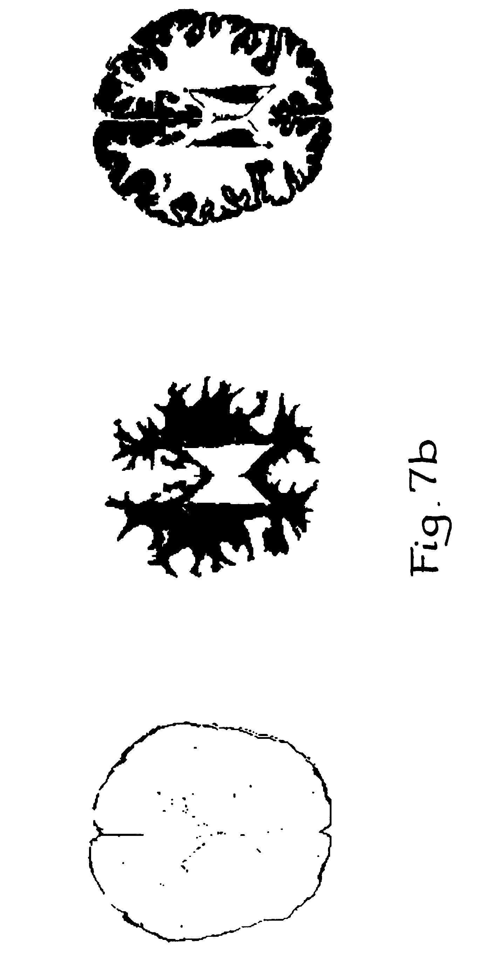

Figure 7b shows Binary maps of pixels assigned (from left to right) to unclassified, white matter and grey matter classes, after spatial connectivity tests and image arithmetic processing have been used to remove circumferential dural rim, and have been applied to the grey and white matter maps;

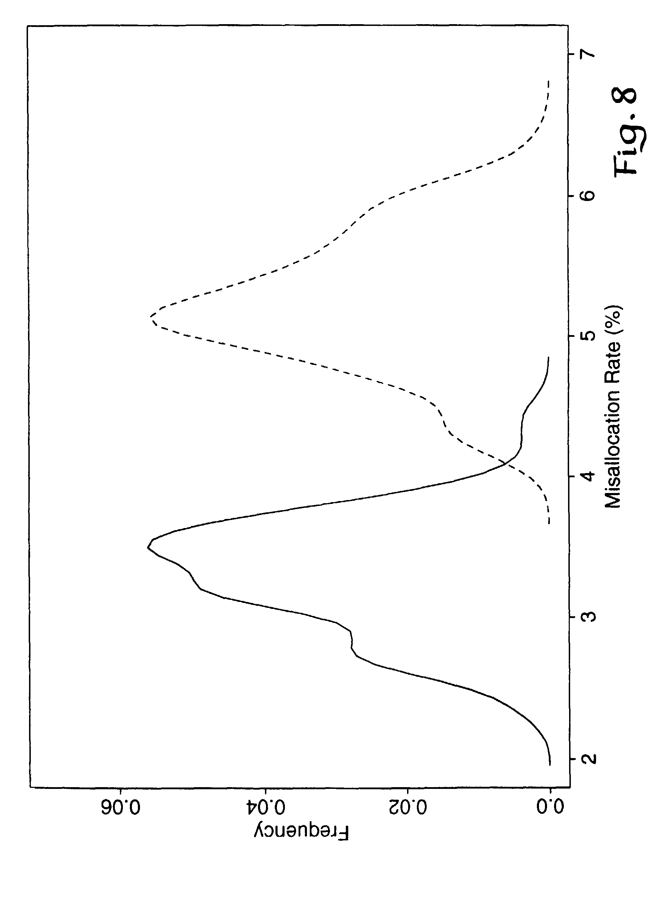

Figure 8 shows graphs of estimated density functions for overall misallocation rate of bootstrap sampled training data by two different methods of discriminant analysis;.

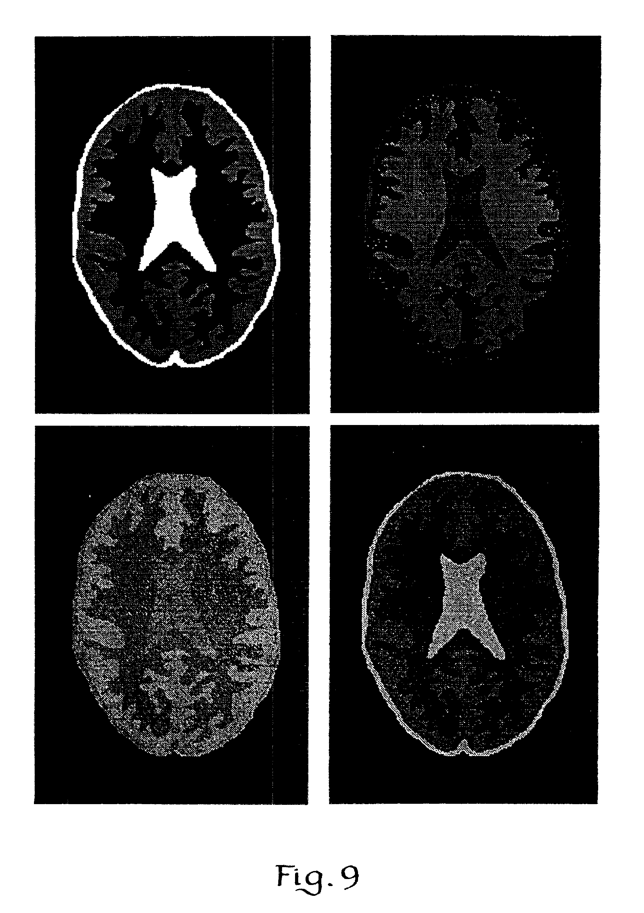

Figure 9 shows simulated MR images in which Anti-clockwise from top left: a) is an anthropomorphic model of 3 brain tissue compartments; b) simulated PD-weighted image: TR 3 sec, $TR_1$ 20 msec, slice thickness 5 mm; c) is a simulated $T_2$-weighted image: TR 3 sec; $TE_2$ 80 msec; slice thickness 5 mm; and d) is a tissue classification of the simulated dual echo image pair (B + C) by logistic discriminant analysis and the Bayes allocation rule; and

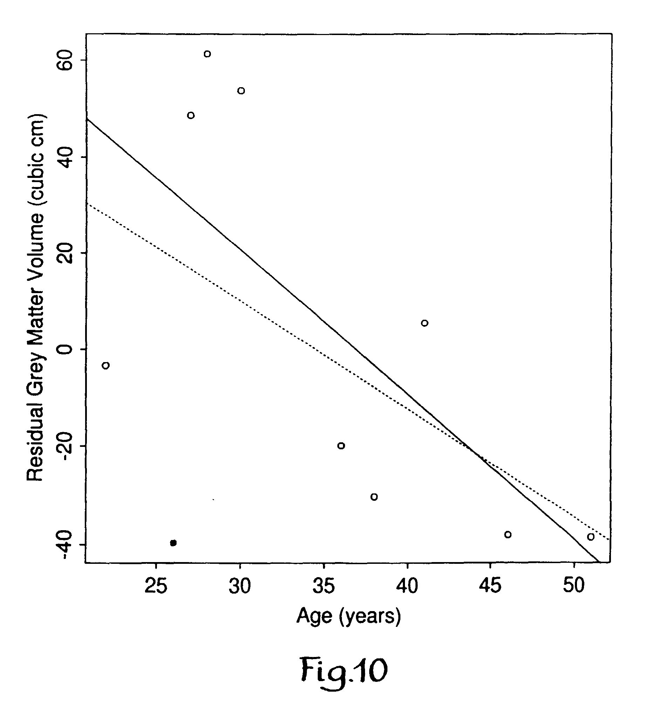

Figure 10 is a scatterplot of residual grey matter volume *versus* age with two straight lines fitted by least squares: the dotted line indicates correlation between grey matter volume and age for all 10 cases (r = -0.52); the solid line indicates correlation for 9 cases, excluding the outlier identified by a solid black circle ($r$ = -0.7);

Magnetic resonance (MR) images of the brain are immediately interesting to many neuroscientists and clinicians because they seem so natural to decipher anatomically by eye. However, in contrast to the facility of qualitative visual segmentation, the process of manual segmentation (by directly tracing the boundaries of anatomical structures onto the image) is tediously time consuming, as well as susceptible to operator bias and error. For these reasons several research groups have attempted to develop more automated methodologies, often based on the signal intensity observed at each voxel of an image. These intensity-based techniques may be broadly subdivided into "univariate" methods, which assign each voxel in the image to one of two or more classes of tissue based on a single grey level or intensity value per voxel; and potentially "multivariate" methods, which are designed to classify each voxel based on more than one signal intensity value per voxel.

The fundamental univariate technique is histogram partition or thresholding. To do this, a range of signal intensity values is defined and all voxels with signal intensity values within that range are assigned to one class, while all other voxels are assigned to another class. This would be adequate if the distribution of signal intensity values in the whole image was truly multimodal: if, for example, all voxels representing a given tissue type shared a Normal distribution of intensity values which was parametrically consistent for that tissue type despite variation in subjects and scanners, and did not substantially overlap the Normal distributions of intensity values for voxels representing other tissue types. However, this assumption (that the underlying distribution is a mixture of univariate Normal components) does not necessarily hold true for brain MR images, largely because of the problem of partial volume artefact. Definition of the optimal intensity range for thresholding may consequently be problematic.

Region-growing algorithms have been developed to allow an operator to adjust initial minimum and maximum thresholds until a continuous boundary enclosing all voxels within the thresholded range approximates to his or her perception of where the regional boundary lies in the image (eg: the AUTOTRACE function in the ANALYZE (Trade Mark) package of image processing software. However, this reintroduces many of the problems with manual segmentation already noted, in particular it may take up to 7 hours to segment a single scan. Alternatively, one can compute *relative* grey level values, or differential intensities, between a single reference voxel interactively identified within a ROI and all other voxels in the image. Contour lines enclosing all voxels with differential intensities arbitrarily close to zero may then be automatically generated and refined by application of a Sobel edge enhancement operator, which detects the voxel locations of greatest local change in differential intensity (Caviness *et al.,* 1989; Kennedy *et al.,* 1989). Yet as Kohn *et al.* (1991) have shown, any univariate approach to segmentation is likely to yield misclassification rates in excess of those obtained when there is more than one signal intensity value per voxel, and most recent work has tended to favour multivariate or multispectral methodologies.

Multivariate classification requires that at least two exactly registered images, each representing the intensity of a different component of the MR signal at an identical set of intracranial locations, are available in place of the single image acceptable for univariate thresholding. In theory it would be possible to use co-registered images acquired with any pair of scanning sequences, or to use co-registered images acquired with more than two scanning sequences. However, to date the most popular choice has been a pair of proton density (PD) weighted and $T_2$-weighted images acquired by a spin echo or fast spin echo, dual echo sequence (Figure 1). Since the PD- and T2-weighted images can be acquired almost simultaneously, the possible contribution of movement artefact is minimised and it may be assumed that the images represent different signal intensity values or "features" for the same anatomical loci. The question is then how to find the best possible partition of the two dimensional feature space into two or more mutually exclusive subregions, each of which corresponds to the bivariate characteristics of a single tissue type. A variety of possible answers to this question have been proposed.

Kohn *et al.* (1991) plotted 2-dimensional scatterplots for a representative sample of voxels, identified two main clusters corresponding to brain and CSF, and defined the optimum partition line as one drawn midway between the bivariate means of the two clusters and parallel to the main axis of the ellipsoid brain cluster. Pfefferbaum *et al.* (1990) used image arithmetic to generate composite images which maximised contrast between tissue compartments. They found that subtraction of a $T_2$-weighted image from a PD-weighted image enhanced contrast between brain parenchyma and CSF, and addition of a $T_2$-weighted image to a PD-weighted image enhanced contrast within brain parenchyma between grey matter and white matter. Voxels were ultimately assigned to one of these three classes by a conventional thresholding operation on the two composite images.

Cline *et al.* (1990) used a more formally specified statistical model, assuming that within each tissue class the probability distribution of PD- and $T_2$-weighted intensity values was bivariate Normal. They estimated the parameters of these distributions (5 parameters per class) for 4 tissue classes, computed the probability of each voxel in the image belonging to each of the 4 distributions, and assigned each voxel to the class for which its probability of membership was greatest. Similarly, Jemigan *et al.* (1990) used pairwise linear discriminant functions to allocate voxels to one of four tissue classes; and Cohen *et al.* (1992) described canonical discriminant analysis to allocate voxels to one of three tissue classes, and reported that this yielded segmented images of superior quality to those obtained by thresholding or image arithmetic operations. Both these latter approaches implicitly share Cline *et al's* (1990) assumption that the class-conditional probability distributions of PD- and $T_2$-weighted intensity values are multivariate Normal: all three studies may therefore be regarded as essentially equivalent examples of fully parametric, Normal theory based linear discriminant analysis (NLDA).

The rest of this description is organised as follows. In Methods and Materials, the notion of a logistic discriminant analysis (LDA) as an alternative to Normal theory based linear discriminant analysis is introduced, and it is shown that the choice of logistic discriminant analysis is justified by the non-Normal distributions of MR signal intensity values in brain images. The likelihood ratio and Bayes rules for allocation of a voxel to one or other of the possible tissue classes; and morphological processing and morphometry of classified images is discussed. In Results, misclassification rates by LDA and NLDA for training data and simulated images are compared; report results of volumetric analysis of 10 images classified by the method, including age related changes in grey matter volume; and were described two studies of inter-operator reliability. In Discussion, methodologies for brain image segmentation are considered in relation to the problem of partial volume artefact.

METHODS and MATERIALS

*Notation*

Let G be a categorical variable with possible values $[G_1, G_2,...,G_g]$, where g is the number of mutually exclusive groups or classes known *a priori* to exist in the population of interest; and let X be a vector of *p* variables or features $(x_1, x_2,...,x_p)$, whose values are known for N individuals in the population. A given individual in the population is denoted $N_i$, with values $X_i$ for the variable or feature vector; a given group is denoted $G_j$ (j = 1,...,g); and the group of a given individual is denoted $G_i$ (i = 1,...,N).

*Logistic discriminant analysis (LDA)*

All forms of discriminant analysis have some characteristics in common. In all cases, the essential problem is to determine probabilities of group membership, $p(G_j)$, on the basis of an individual's values for the feature vector, $X_i$. This is done by using a discriminant function to transform the *p*-dimensional vector, $X_i$, to a g-dimensional vector with elements $p(G_j|X_i)$, for each individual. The discriminant function will generally have been "trained" on a subset of data, sampled from the whole set to be classified, for which the class membership of each individual, $G_i$, is independently known.

The distinctive assumption of logistic discriminant analysis is that the log odds ratio for membership of a given group is linear in X. More formally, for the binary case (i.e., g = 2), $p(G_1 | X_i)$ = the probability of $N_i$ belonging to group 1, $p(G_2 | X_i)$ = the probability of $N_i$ belonging to group 2, and

$$\log \frac{P(G_1 \mid X_i)}{p(G_2 \mid X_i)} = \beta_0 + \beta_1 x_1 + \beta_2 x_2 ... + \beta_p x_p, \tag{1}$$

where $\beta_0, \beta_1,...,\beta_p$ denote coefficients to be estimated, usually by maximum likelihood, from the training set. Also in the case where g = 2, (1) can be rewritten as follows:

$$p(G_1|X_i) = \frac{\exp(\beta_0 + \beta_1 x_1 + \beta_2 x_2 ... + \beta_p x_p)}{1 + \exp(\beta_0 + \beta_1 x_1 + \beta_2 x_2 ... + \beta_p x_p)} \tag{2}$$

Or:

$$p(G_2|X_i) = \frac{1}{1 + \exp(\beta_0 + \beta_1 x_1 + \beta_2 X_2 ... + \beta_p x_p)} \tag{3}$$

These results can be easily extended to treatment of individuals in a population, such as the population of voxels in a dual echo MR image pair, which is known to be divided into more than two groups. Assuming that grey matter (gm), white matter (wm) and cerebrospinal fluid (csf) are the threee major brain tissue classes recognised a priori, and that the feature vector at a given voxel, $\mathbf{X}_i$, comprises $x_i^{PD}$ and $x_i^{T2}$, then a set of three equations predicting the probability of that voxel's membership of each of the three tissue classes can be written as below:

$$p(G_{gm}|X_i) = \frac{\exp(\beta_0 + \beta_1 x_i^{PD} + \beta_2 x_i^{T2})}{1+\exp(\beta_0+\beta_1 x_i^{PD}+\beta_2 x_i^{T2})+\exp(\beta_3+\beta_4 x_i^{PD}+\beta_5 x_i^{T2})} \tag{4}$$

$$p(G_{wm}|X_i) = \frac{\exp(\beta_3+\beta_4 x_i^{PD}+\beta_5 x_i^{T2})}{1+\exp(\beta_0+\beta_1 x_i^{PD}+\beta_2 x_i^{T2})+\exp(\beta_3+\beta_4 x_i^{PD}+\beta_5 x_i^{T2})} \tag{5}$$

$$p(G_{csf}|X_i) = \frac{1}{1+\exp(\beta_0+\beta_1 x_i^{PD}+\beta_2 x_i^{T2})+\exp(\beta_3+\beta_4 x_i^{PD}+\beta_5 x_i^{T2})} \tag{6}$$

The most salient theoretical advantage of adopting this polychotomous logistic model to predict the probability of each individual's membership of each class is that it implies no assumptions about the class-conditional distributions of **X**. This is a consideration of more than purely theoretical interest since it has been found that the distribution of PD- and $T_2$-weighted intensity values in brain MR images is typically not bivariate Normal.

Figure 2 shows a scatterplot of $T_2$- *versus* PD-weighted intensity values for a training set of 2 836 voxels interactively sampled from the pair of images shown in Figure 1; also shown are univariate histograms of PD- and $T_2$-weighted intensity values in the training set. Neither of these marginal distributions is univariate Normal (the histogram of PD-weighted intensity values looks bimodal and the histogram of $T_2$-weighted intensity values is markedly positively skewed). Further graphical evidence that the assumption of class-conditional multivariate Normality is violated by these data can be obtained from a series of chi-squared quantile plots of the ranked generalised distances ($Z_i$) of each observation from the class mean vector. Departures from linearity in these plots indicate departures from bivariate Normality in the data. The resulting plots for the training data are shown in Figure 3. The bivariate distribution of PD- and $T_2$-weighted intensity values is Normal for white matter, but skewed for grey matter and frankly not Normal for CSF; which again suggests that LDA will be a more appropriate basis for classification of brain MR images than NLDA.

The six parameters in Eqs. (4 - 6) were estimated from the training set shown in Figure 2 by maximum likelihood, using a quasi-Newton algorithm implemented in S-PLUS (see *Programming Aspects* below for details). Starting values for the parameters were provided by a pair of preliminary binary logistic discriminant analyses using the general linear modelling function (glm) in S-PLUS (see Eqs. (2 and 3)); first with $G_1 = G_{gm}$ and $G_2 = G_{wm} + G_{csf}$, then with $G_1 = G_{wm}$ and $G_2 = G_{gm} + G_{csf}$. Figure 4 demonstrates the form of probabilities of class membership derived from the polychotomous logistic model, incorporating maximum likelihood estimates of the $\beta$ coefficients derived from the training set.

Probability of class membership was likewise computed for each voxel in the original image. Figure 5 shows maps of the probability for each voxel in the image belonging to each of the three tissue classes. For each of these maps, the appearance of regions with a high probability of class membership is anatomically plausible. The white matter map shows a rim of dura enclosing a sharply delineated and internally homogeneous subcortical core of tissue; the CSF map shows lateral ventricular and sulcal collections of fluid; and the grey matter map shows a serpiginous ribbon of cerebral cortex, and the basal ganglia. It can also be seen that proportinally more voxels in the CSF and grey matter maps have intermediate probabilities of class membership than in the white matter map. It will be argued that this is because some voxels truly represent significant proportions of both grey matter and CSF tissue classes, due to partial volume artefact (see Discussion). Voxels such as these, representing significant proportions of two different tissue classes, will be referred to as "bipartial voxels".

*Allocation rules*

Once probabilities of class membership have been derived by a discriminant function from the image data, it remains to make an outright assignment of each voxel to one of the classes according to some allocation rule; the combination of a discriminant function and an allocation rule will be referred to as a classification scheme.

The optimal or Bayes allocation rule minimises the risk of misallocation by assigning each voxel to the class for which its posterior probability of membership is greatest. The posterior probabilities, $\pi(G_j)$, are defined by the probabilities for class membership derived from the data, $p(G_j|\mathbf{X}_i)$, weighted by the prior probabilities of class membership, $q(G_j)$. Assuming that the costs of misallocation are equal, the Bayes rule may thus be written more formally: assign $N_i$ to $G_j$ if

$$p(G_j \mid X_i)q(G_j) \geq p(G_k|X_i)q(G_k)(k=1,...,g;k\neq j) \tag{7}$$

Or: assign $N_i$ to $G_j$ if

$$\frac{p(G_j|X_i)}{p(G_k|X_i}\geq\frac{q(G_k)}{q(G_j)}(k = 1,...,g;k\neq j) \tag{8}$$

Most previous classification schemes for brain MR images have applied this allocation rule with the prior probabilities for group membership, $q(G_j)$, assumed to be equal; in which case, the Bayes rule is equivalent to the likelihood ratio rule: assign $N_i$ to $G_j$ if

$$\frac{p(G_j|X_i)}{p(G_k|X_i)} \geq 1 \, (k = 1,...,g;k\neq j) \tag{9}$$

Figure 6a illustrates the result of classifying an original image according to the likelihood ratio rule; it looks plausible, but it is suggested there are two limitations to this method of voxel allocation. Firstly, it neglects previous observations that the approximate relative proportions (and therefore the prior probabilities) of grey matter, white matter, and CSF in the brain are not equal. For example, Jernigan *et al.'s* (1990) MRI study of 20 normal individuals estimated the supratentorial proportions of grey matter, white matter and CSF to be approximately 0.5, 0.4, and 0.1, respectively. Secondly, the likelihood ratio rule makes no distinction between voxels that are classified with a high degree of certainty (i.e. with a likelihood ratio >> 1) and voxels classified with a lesser degree of certainty (i.e. with a likelihood ratio ∼ 1). For example, it is possible to imagine a pair of voxels, one of which ($N_1$) has a set of approximately equivalent class membership probabilities derived from the data (eg: $p(G_{gm}|\mathbf{X}_1) = 0.36$, $p(G_{wm}|\mathbf{X}_1) = 0.30$, $p(G_{csf}|\mathbf{X}_1) = 0.34$); while the other ($N_2$) has markedly dissimilar values for the same set of probabilities (eg: $p(G_{gm}|\mathbf{X}_2) = 0.80$, $p(G_{wm}|\mathbf{X}_2) = 0.15$, $p(G_{csf}|\mathbf{X}_2) = 0.05$). Both these voxels will be assigned by the likelihood ratio rule to the grey matter class, although $N_1$ is less than 50% likely to be a grey matter voxel, indeed it is less than 50% likely to be a member of any single tissue class. Voxels like $N_1$, which could be said to have some qualities of all three tissue classes, will be referred to as "tripartial voxels".

In the light of these considerations, the following approach to allocation is adopted. Tripartial voxels were first identified, and allocated to a fourth class comprising all uncertainly classified voxels, $G_{uc}$, according to the rule: assign $N_i$ to $G_{uc}$ if

$$p(G_{gm}|X_i) < 0.5 \wedge p(G_{wm}|X_i) < 0.5 \wedge p(G_{csf}|X_i) < 0.5 \qquad (10)$$

All voxels that were not thus assigned to $G_{uc}$ were then allocated to one of the three tissue classes according to the Bayes rule (Eq. (8)) incorporating differential prior probabilities: $q(G_{gm}) = 0.5$; $q(G_{wm}) = 0.4$; $q(G_{csf}) = 0.1$. These values for the prior probabilities are the proportions of supratentorial brain volume occupied by each tissue class, reported by Jernigan *et al.* (1990), and rounded to one significant figure.

Figure 6b illustrates the original image reclassified in this way; it can be seen that there are subtle differences relative to Figure 6a. About 50 tripartial voxels have been identified at points of transition between anatomical regions of different tissue types, mostly in the vicinity of the lateral ventricles; there are also proportionally fewer voxels classified as CSF and more classified as grey matter.

*Morphological processing*

Another way of looking at these results of primary image segmentation is by examining binary maps of the voxels assigned to each of the 4 mutually exclusive classes (Figure 7a). Most voxels in the white and grey matter maps are spatially connected to one of a few, large, homogeneous regions of identically classified voxels, which are anatomically recognisable as cortex, basal ganglia, subcortical white matter, etc.. There are also a number of voxels, that have been classified on the basis of their individual signal intensity values as white or grey matter, but are not a part of these major homogeneous regions. Since it may be reasonable to assume that a voxel truly representing solid, parenchymatous, brain tissue should be spatially connected to a cluster of identically classified neighbours, it may be equally reasonable to question the validity of class membership (based solely on signal intensity values) of these spatially disconnected, anatomically unrecognisable, "noisy"-looking, voxel clusters. There are also a number of such spatially disconnected voxel clusters in the CSF map; but in view of the different physical properties of cerebrospinal fluid, it seems *a priori* less reasonable to question their validity.

A second criterion for class membership, applied only to voxels already assigned to $G_{gm}$ or $G_{wm}$, and based on spatial connectivity rather than signal intensity values, was therefore explored at this stage. The number of primarily classified voxels (nPIX) constituting each region or cluster in the binary maps of grey and white matter was ascertained using a C algorithm for determination of equivalence classes. Voxels that were found to be spatially isolated (i.e., with none of their 8 nearest neighbours primarily classified as grey or white matter; nPIX = 1), or spatially contiguous with a relatively small cluster of primarily classified voxels (nPIX < 50), were deemed to have failed this second test for grey or white matter class membership, and were therefore assigned to $G_{uc}$. Whereas voxels that were spatially contiguous with a relatively large region or cluster of primarily classified voxels (nPIX > 50) were definitively accepted, or secondarily classified, as members of $G_{gm}$ or $G_{wm}$. The threshold value for nPIX, below which voxel clusters are secondarily assigned to $G_{uc}$, may be defined arbitrarily; but we found empirically that a threshold of 50 removed most anatomically questionable voxel clusters from the secondarily classified maps of grey and white matter, without undue loss of more anatomically plausible voxel regions (see Figure 7b).

Further morphological processing was necessary to remove the circumferential rim of dura from the binary map of white matter. Grey matter, white matter, CSF and unclassified maps were added to create a map of total brain area (TBA); the TBA map was processed using morphological erosion; the eroded TBA map was then subtracted from the original TBA map, yielding a map of the outer rim of the total brain area. Subtraction of this latter "rim map" from the white matter map largely removed the dural structure.

The results of morphological processing, including both spatial connectivity testing and the dura removal procedure (including creation of a total brain area map), are shown in Figure 7b; voxels presumed to represent dura have been assigned to $G_{uc}$.

*Morphometry*

From the binary maps shown in Figure 7, it is straightforward to count the number of voxels in each slice representing grey matter, white matter and CSF; as well as the number of unclassified voxels, and the total number of voxels in all four possible categories. Multiplying voxel counts by the x and y dimensions of each voxel (field of view divided by image matrix width and height), yields the area ($mm^2$) occupied by each tissue class; multiplying areas by the z dimension of each voxel (slice thickness plus interslice gap) yields an estimate of the volume ($mm^3$) occupied by each tissue class in a single slice; summing volumes across all slices in a scan yields an estimate of the volume occupied by each class in the whole brain. Other morphometric analyses, including both fractal analysis and radial analysis ("Cerebral hemispheric asymmetry revisited : effects of handedness, gender and schizophrenia measured by radius of gyration in magnetic resonance images", Psychological Medicine, vol. 25, pages 349-363, Bullmore *et al.* 1995) of the boundary between grey and white matter, are also supported by the present invention; but we will concentrate below on the results of volumetric analysis.

*Programming aspects*

An integrated system for polychotomous logistic discriminant analysis, Bayesian allocation, morphological processing and morphometry of dual echo MR images of the brain was written using a combination of tools. S-PLUS is a relatively high level language for statistics and graphics, which includes an optimisation algorithm (ms) for minimisation of an arbitrary objective function without requiring the user to supply its 1st or 2nd order derivatives. This was used to estimate the polychotomous logistic regression ($\beta$) coefficients from training data sets. The lower level C language was used for input/output operations, implementation of the Bayes rule, spatial connectivity testing, and voxel counting . The PBMPLUS package was used as a source of image processing routines. C shell scripts were used to create the user interface, to coordinate calls to individual S and C programmes, and to create and maintain directory structures.

*Operational aspects*

The programme was run under UNIX on a local area network of SUN SPARCstations (Sun Microsystems Inc., California). Total operator time required to prepare a 34-slice dual echo MR image for input was approximately 1 hour; total processing time required to complete classification and morphometry of such an image was approximately 90 minutes.

Preparation of an individual image for input involved the following steps:

i) transfer of image and header files from optical disc storage to a working directory on hard disc.
ii) "dissection" of skull and surrounding soft tissue from the brain in each slice of the image, using image editing tools in ANALYZE.
iii) dissection of brain stem and cerebellar structures from other cerebral (supratentorial) structures, and storage of brainstem image files.
iv) selection of training regions for each of the 3 tissue classes.

Preliminary studies showed that grey and white matter in the cerebellum and brain stem were not always well differentiated on the basis of training data sampled from supratentorial structures. Data from these regions, included in the brainstem image files created at step (iii), were therefore classified simply as CSF or not-CSF (i.e., grey and white matter were combined).

Training sets were group conditionally sampled from each image to be classified according to the following protocol. The operator first identified the 4 paired slices of the image in which the lateral ventricles were most clearly visible. We found that these 4 PD-weighted images provided the best tissue contrast for sampling full volume voxels from regions of white matter (in the right and left internal capsule) and grey matter (in the right and left fronto-parietal cortex, and bilateral subcortical nuclei). The 4 $T_2$-weighted images were used to sample full volume voxels in the CSF of the right and left lateral ventricles. It was important for operators to pay attention to the particular hazards of including voxels partly or wholly representing grey matter in their samples of CSF, or voxels partly or wholly representing CSF in their samples of grey matter; white matter regions were easier to sample consistently in these images. Operator time required to generate training regions was approximately 15 minutes.

Numerical output comprised the following area measures (in units of $cm^2$) for each pair of dual echo image slices input: total brain area; unclassified voxel area; brain stem + cerebellum parenchyma area; supratentorial grey matter voxel area, white matter voxel area, and CSF voxel area.

*Imaging parameters and sample characteristics*

10 individuals (6 male, 4 female; age range 22 - 51 years, mean age 34.5 years), recruited as normal controls for a study of familial schizophrenia, were imaged using a 1.5 Tesla GE Signa Advantage system (General Electric, Milwaukee, Wisconsin) at St George's Hospital, London. A multislice, dual echo fast spin echo MR dataset was acquired from each subject with the following parameters: repetition time (TR) 3.5 seconds, effective echo times ($TE_1$, $TE_2$) 19 msec and 95 msec; size of the image matrix 256 x 256, field of view 22 cm; voxel x and y dimensions 0.86 mm; slice thickness 5 mm and interslice gap 2.5 mm; number of excitations 1. Flow compensation by gradient moment nulling was performed in a direction perpendicular to the image plane.

RESULTS

*Misclassification rates for training data*

It is possible to evaluate the relative merits of alternative methods of image segmentation in terms of their misclassification rates (MCR). The simplest estimate of misclassification rate is obtained by estimating the parameters of a given discriminant function from a set of training data, using those parameters to compute probabilities of class membership for each voxel in the set, assigning each voxel to one of the possible classes by applying an allocation rule, then comparing results of this classification with the known *(a priori)* class membership of each voxel. Thus the performance of polychotomous logistic discriminant analysis (LDA) to that of a Normal theory based method, pairwise linear discriminant analysis (NLDA; as described by Jernigan *et al.* (1990)) is compared. In each case, voxels were ultimately assigned to one of three possible classes by the likelihood ratio allocation rule. The overall misclassification rates obtained for each method are shown in Table 1; the apparent MCR for NLDA is approximately 60% greater than for LDA.

Estimating the misclassification rate in this way, however, is likely to give an over-optimistic impression of how well any method will perform. One way of obtaining less biased estimates of the misclassification rate (and its standard error) is to use the computer-intensive technique of random sampling with replacement, or bootstrapping. The procedure we adopted was as follows: the original training set was randomly sampled with replacement to generate a bootstrap sample of the same size as the original set; parameters for each of the candidate discriminant functions, LDA and NLDA, were computed from the bootstrap sample; members of the bootstrap sample were classified according to the likelihood ratio rule, and their assigned class compared to their known class. This procedure was repeated 100 times to generate bootstrap distributions of the overall MCR for each method, which are summarised by their means and standard errors in Table 1, and by their estimated density functions in Figure 8. As expected, the mean bootstrap misclassification rates for both methods are slightly greater than their apparent misclassification rates; however, there is clearly still a considerable difference in the performance of the two methods. The mean bootstrap misclassification rate for NLDA is approximately 50% greater than the mean bootstrap MCR for LDA, and the 95% confidence intervals for the two mean bootstrap rates do not overlap. A Z statistic to test the null hypothesis of no difference in the two mean misclassification rates: MCR(LDA)- MCR(NLDA) = -1.91; Z = -3.82, p < 0.001 was used. It was concluded that there is a significant difference between the two methods in misclassification rates for training data.

*Misclassification rates for simulated images*

Magnetic resonance image simulation is a useful tool in the evaluation of methods for image segmentation. From the anthropomorphic model shown in Figure 9a, it is possible to simulate a pair of dual echo, spin echo MR datasets with arbitrary echo times ($TE_1$, $TE_2$), repetition time (TR), and slice thickness ("Improvements to the quality of MRI cluster analysis", Magnetic Resonance Imaging, vol. 12, no. 8, 1994, Simmons *et al.*). The choice of these image acquisition parameters will have an important influence on the distance between tissue class means in 2-dimensional feature space. For example, images acquired with a relatively short repetition time will generally show less clear separation between tissue class means than images acquired with relatively long repetition times.

Three dual echo, spin echo MR image pairs were simulated ($TE_1$ 20 msec; $TE_2$ 80 msec), with a slice thickness of 5 mm, over a range of repetition times (TR 1000, 2000, and 3000 msec); see Figure 9b. Each pair of simulated images was segmented into 3 tissue classes by logistic discriminant analysis (LDA) and by a Normal theory based method of discriminant analysis (NLDA; as used by Cline *et al.* (1990)); in both cases, the likelihood ratio rule was used for allocation. The misclassification rates obtained by the two methods for each tissue class in each simulated pair of images are shown in Table 2. As expected, the misclassification rates for grey and white matter are greater for both methods at shorter repetition times (when tissue contrast is poorer) than at longer repetition times (when tissue contrast is better). It is also clear that LDA consistently performs better than NLDA whatever the inherent tissue contrast of the images.

*Absolute and proportional volumetric results for real images*

Table 3 shows mean absolute and proportional volumes for grey matter, white matter, CSF, unclassified voxels, brain stem + cerebellum, and total brain; in all cases, these means are calculated as the average of two raters' estimates of volumes in 10 scans acquired as above from normal subjects (i.e., N = 20). Approximate proportions of supratentorial volume accounted for by each of the three tissue classes may be compared to the approximate proportional volumes reported by Jemigan *et al.* (1990).

The mean total brain volume (TBV) of our sample was a little greater than other estimates of TBV in the literature; for example, Caviness *et al.* (1989) reported mean TBV of 1343 cm$^3$ (SD 127), and Cohen *et al.* (1992) reported mean TBV of 1349 cm$^3$ (SD 149.4). Absolute volumes of brain stem + cerebellum, and supratentorial white matter, estimated in this study lie within one standard deviation of comparable means reported by Caviness *et al.* (1989); unfortunately, there are no comparable estimates of absolute supratentorial grey matter or CSF volume in the imaging literature. In any case, absolute volumes are not the ideal basis for assessing the validity of segmentation algorithms, since differences between studies in image acquisition parameters and/or overall head and body size of the "normal" sample scanned are likely to make a significant but inexactly specified contribution to any discrepancy in absolute volumes.

Unclassified voxels constituted on average 7% of supratentorial volume, and most of these comprised the circumferential rim of dural tissue visible on all our scans.

*Age related volume changes in real images*

Grey matter is expected to decrease in volume during normal adulthood, and this may be associated with a compensatory increase in CSF volume during later life (Jernigan *et al.* 1990). White matter volume is relatively uncorrelated with ageing. Simple linear regression models were used, with total brain volume as the explanatory variable and supratentorial grey matter, white matter, and CSF volumes as the dependent variables, to control for differences between subjects in overall head size. As shown in Figure 10, residual grey matter volume was negatively correlated with increasing age (Pearson's correlation coefficient, r = -0.52, p = 0.1). When a single conspicuous outlier (with unusually low residual grey matter volume for his age, and a history of threatened abortion prior to birth) was omitted from analysis, the strength of negative correlation became significant (r = -0.7, p < 0.05). White matter and CSF volumes were positively correlated with age, but in neither case was the association significant.

*Inter-operator reliability of classification of real images*

Two inter-operator reliability studies were conducted. First, the reliability of a classification scheme consisting of LDA and the likelihood ratio allocation rule was compared to that of a scheme consisting of LDA and the Bayes allocation rule with differential prior probabilities. Training sets were independently sampled from each of 5 multislice MR images by two operators (GR and EB). Each image was then classified by each scheme on the basis of each operator's training set. For the combination of LDA and the likelihood ratio allocation rule, the intra-class correlation coefficients (ICCs) for supratentorial grey matter, white matter and CSF areas were 0.99, 0.97 and 0.92, respectively. For the combination of LDA and the Bayes allocation rule, the ICCs for the same regional measurements were 0.99, 0.97 and 0.95, respectively. In other words, allocation by the Bayes rule proved to be a slightly more reliable basis for measurement of CSF area than allocation by the likelihood ratio rule.

A larger study was then conducted to compare the performance of LDA combined with the Bayes allocation rule to the inter-operator reliability results obtained by other groups using NLDA combined with the likelihood ratio rule. Training sets were independently sampled from each of 10 scans by the same two raters as before. Pearson's correlation coefficients and intraclass correlation coefficients were calculated for supratentorial grey matter, white matter and CSF areas. The results are given in Table 4, and may be compared to inter-rater reliability coefficients reported by Jernigan *et al.* (1990) and Cohen *et al.* (1992).

DISCUSSION

The main questions to be addressed in assessment of any method of measurement are: is it valid?; and, is it reliable? In the case of a computerised system for brain magnetic resonance image classification and morphometry it is wise also to consider how quick and easy the method is to use; since there is unlikely to be much interest in such a system, however impressive it may seem on paper, if high operational overheads will severely limit its range of practical applications.

*Validity*

We have assessed the validity of our method in several ways. Firstly, we have estimated the misclassification rate that results from using logistic discriminant analysis to classify a training set of voxels with known *(a priori)* tissue class membership. The 95% confidence interval for mean misclassification rate, estimated by a bootstrap procedure, was 2.49 - 4.13%; and we showed that this represents a significant improvement over the bootstrap misclassification rate estimated for Normal theory based linear discriminant analysis (Table 1).

Secondly, we have used logistic discriminant analysis to classify simulated dual echo images and demonstrated that, when tissue contrast in the simulated images is good (TR 3000 msec), the misclassification rates for all three tissue classes were less than 1% by logistic discriminant analysis. Even when tissue contrast was poor (TR 1000 msec), the class conditional misclassification rate by LDA was never greater than 10%. These results compared very favourably with the misclassification rates obtained using Normal theory based discriminant analysis to classify the same set of simulated images (Table 2).

Thirdly, we have used our method to estimate the volume of each tissue class in a set of 10 images acquired from normal subjects. The proportions of supratentorial volume accounted for by each of the three tissue classes corresponded closely with proportional volumes previously reported by Jernigan *et al.* (1990) (Table 3); although this is arguably imperfect evidence of validity, since the data reported by Jernigan *et al.* (1990) supplied prior probabilities of group membership for the Bayes rule in our study. We have also shown that absolute volumes for total brain volume, brain stem + cerebellar volume, and supratentorial white matter volume, were all within one standard deviation of the means reported by Caviness *et al.* (1989).

Finally, we have presented some preliminary evidence of neurobiological validity, namely that supratentorial grey matter volume measured by our method, and corrected for effects of head size by linear regression, was negatively correlated with age. This relationship was anticipated both theoretically and by the results of previous morphometric studies of normal ageing, and it is encouraging that our method was sensitive enough to detect it in such a small sample (N = 10).

Collectively, these results make a strong case for the validity of our method, and indicate that brain tissue classification by logistic discriminant analysis (LDA) is more accurate than classification by alternative methods of Normal theory based linear discriminant analysis (NLDA). As we discuss below, there may be reasons why this latter conclusion should not be regarded as surprising.

It is well known that NLDA will only be optimal for classification on the basis of a multivariate feature vector if the distributional form of the features in each class is multivariate Normal. We have shown (Figure 3) that this assumption is not always justified in the context of brain tissue classification of dual echo MR images; the class conditional distributions of PD- and $T_2$-weighted intensity values were not bivariate Normal for grey matter or CSF training data. It could be argued that this apparent non-Normality is a "local" problem, due perhaps to lax sampling of grey or CSF voxels from the original images, or to poor tissue contrast between grey matter and CSF at the late echo time (95 msec) chosen to acquire these images. However, we have consistently found evidence for class conditional non-Normality in several training sets carefully sampled from images with apparently excellent grey/CSF tissue contrast. We therefore prefer to explain this finding as a manifestation of the ubiquitous problem of partial volume artefact.

Due to the finite spatial resolution of digital brain images, and the complexity of anatomical interfaces between brain regions of different tissue types, it is widely accepted as inevitable that not all pixels or voxels in an image will be entirely representative of tissue of a single class ("Densitometric analysis of scans : important sources of artefact", Psychological Medecine, vol. 15, pages 879-889, Jacobson *et al.* 1985). Voxels in the vicinity of complex anatomical boundaries between grey matter and CSF are particularly likely to be representative of a mixture of heterogeneous tissue types (Baldy *et al.* 1986); and the signal intensity values of these partial volume voxels will therefore be atypical compared to the intensity values of full volume voxels wholly representative of a single tissue type.

We suggest that a corollary of this phenomenon is that the class conditional distributions of PD- and $T_2$-weighted intensity values will generally not be bivariate Normal. In other words, we propose that partial volume artefact and class conditional non-Normality are two sides of the same coin, and so segmentation of an image containing partial volume artefact will always be more precisely achieved by a method, such as logistic discriminant analysis, which does not assume class conditional multivariate Normality.

*Reliability*

We have reported inter-operator reliability coefficients for estimation of supratentorial grey matter, white matter, and CSF areas which compare favourably with reliability coefficients previously reported for alternative MRI classification schemes. There are a number of conceivable explanations for this apparent gain in reliability: for example, it could simply be that we were able to sample training data with less inter-operator variability (thanks to a more stringently defined sampling protocol, or better tissue contrast in the sampled images) than Jernigan *et al.* (1990), or Cohen *et al.* (1992). However, both these groups reported careful procedures for sampling training data from images that had been acquired with parameters not greatly dissimilar to the image acquisition parameters used in this study (see Table 4). An alternative explanation is that reliability (as well as validity) of classification depends on methodological management of partial volume artefact.

It seems intuitively reasonable that the voxels in an image most likely to be differently classified on the basis of two training sets (independently sampled by different operators) are those voxels at least partly representative of more than one tissue type. Bipartial voxels, representative of a mixture of two tissue types, were most numerous in our images at the complex anatomical interface between grey matter and CSF; tripartial voxels, representative of a mixture of all three tissue types, were fewer and mostly located in the vicinity of the lateral ventricles. To minimise differential classification of these inherently ambiguous voxels on the basis of different training sets, we used an allocation rule which first identified all tripartial voxels (which had a less than 50% probability of belonging to any single tissue class) and assigned them to $G_{uc}$, the group of unclassifiable voxels. All remaining voxels were then assigned to one of the three tissue classes by the Bayes allocation rule with differential prior probabilities ($q(G_{gm})$ = 0.5; $q(G_{wm})$ = 0.4; $q(G_{csf})$ = 0.1). The chief advantage of this rule, with respect to the problem of differential classification of partial volume voxels, is that it decisively "ups the ante" for CSF class membership. Since CSF is so much less likely *a priori* to be represented than either grey or white matter, the data derived probability of CSF class membership, $p(G_{csf}|X_i)$, must be considerably greater than 0.5 for that voxel to be ultimately assigned to the CSF class. In other words, for membership of one of the classes where we anticipate the greatest problem of bipartial volume artefact, the Bayes rule demands the highest standards of proof of class membership from the data. The practical benefit of this approach was confirmed by the first of our reliability studies, which demonstrated an incremental increase in reliability of classification of CSF by this allocation procedure compared to the likelihood ratio rule.

*Overheads*

Not all previous studies have explicitly documented the operational overheads entailed in implementation, so it is difficult to make direct comparisons with other multispectral techniques. However, to sample training data and otherwise prepare an image for input to the programme takes approximately one hour, which is several times less expensive in operator time than a more fully interactive (eg: region-growing) approach to image segmentation. The central processing unit time then required for classification and morphometry of a 34 slice dual echo image on a Sun SPARCstation is approximately 90 minutes. On these grounds, the method seems likely to prove useful in the management of large, epidemiologically based imaging studies of psychiatric or neurological disease, as well as the routine quantification of MR datasets acquired for clinical purposes.

For the avoidance of doubt, the term voxel, as used in this description, is an equivalent in three dimensions to the term pixel in two dimensions and it is appreciated that the present invention may be modified such that it is capable of being adapted to image two or three dimensional objects.

It will be appreciated that the present embodiment has been described by way of example only and variation may be made without departing from the scope of the invention.

Table 1

Apparent and Bootstrap Misclassification Rates (MCRs)

for Training Data

| | Apparent MCR (%) | Bootstrap MCR (%) | | |
|---|---|---|---|---|
| | | Mean | Standard Error | 95% C.I.[a] |
| Logistic Discriminant Analysis | 3.17 | 3.31 | 0.42 | 2.49-4.13 |
| Pairwise Linear Discriminant Analysis | 5.18 | 5.22 | 0.49 | 4.26-6.18 |

Note:   [a] 95% C.I. = 95% confidence interval = mean MCR ± (1.96 * standard error).

Table 2

Class Conditional Misclassification Rates

for Simulated MR Images[a].

| Repetition Time (msec) | Grey Matter[b] (%) | White Matter[b] (%) | CSF[b] (%) |
|---|---|---|---|
| 1000 | 8.4 (28.1) | 6.4 (17.5) | 0 |
| 2000 | 3.3 (9.9) | 2.6 (6.2) | 0 |
| 3000 | 0.8 (3.8) | 0.6 (3.0) | 0 |

Note:   [a]     Dual echo (spin echo) magnetic resonance images simulated with $TE_1$ 20 msec, $TE_2$ 80 msec, slice thickness 5 mm, and repetition time, TR, as shown.

[b]     Misclassification rates for Normal theory based discriminant analysis are shown in parentheses.

## Table 3

### Absolute and Proportional Brain Tissue Class Volumes

| | Mean (cm³) | SD | Standard Error of Mean | 95% Confidence Interval (mean ± 2 * s.e.mean) | % STV | % TBV |
|---|---|---|---|---|---|---|
| Total Brain Volume (TBV) | 1358.0 *1343.4[b]* | 109.7 *126.9[b]* | 24.5 | 1308.9-1407.1 | - | 100 |
| Unclassified | 79.3 | 20.3 | 4.5 | 70.3-88.3 | 7 | 6 |
| Brain stem/ cerebellum | 192.7 *161.8[b]* | 16.7 | 3.7 | 185.2-200.2 | - | 14 |
| Grey matter | 599.2 | 44.2 | 9.88 | 579.4-619.0 | 51 *52[a]* | 45 |
| White matter | 345.7 *400.6[b]* | 67.0 *72.1[b]* | 15 | 315.7-375.7 | 30 *37.5[a]* | 25 |
| CSF | 141.8 | 39.8 | 8.9 | 124.0-159.6 | 12 *10.5[a]* | 10 |

Notes:

TBV = Total brain volume

STV = Supratentorial volume = Total brain volume - brain stem + cerebellar volume

[a] Mean proportional volumes reported by Jernigan *et al.* (1990).

[b] Mean absolute volumes and standard deviations reported by Caviness *et al.* (1989).

Table 4

Inter-operator Reliability Coefficients

|  | Intraclass Correlation Coefficients | Cohen *et al.* (1993)[a] | Pearson's Correlation Coefficients | Jernigan *et al.* (1990)[b] |
|---|---|---|---|---|
| Number of scans analysed | 10 | 10 | 10 | 20 |
| Grey matter | 0.99 | 0.91 | 0.99 | 0.92 |
| White matter | 0.98 | 0.88 | 0.98 | 0.84 |
| Cerebrospinal fluid | 0.92 | 0.87 | 0.93 | 0.98 |

[a]    Intraclass correlation coefficients for canonical discriminant analysis with likelihood ratio allocation rule. Image acquisition parameters: TR 2.7 sec, $TE_1$ 30 msec, $TE_2$ 90 msec, slice thickness 5 mm.

[b]    Spearman's rank order correlation coefficients for pairwise linear discriminant functions. Image acquisition parameters: TR 2 sec, $TE_1$ 25 msec, $TE_2$ 70 msec, slice thickness 5 mm.

**Claims**

1.  Apparatus for obtaining an image comprises means for obtaining an image, which image comprises a plurality of pixels (or voxels), means for converting said image into machine readable data such that the data is representative of said pixels (or voxels); means for according relative values to each of said data; characterised in that means is provided for performing a logistic discriminant analysis of said data, such that estimates of a logistic regression co-efficient are obtained, said logistic regression coefficient being used to estimate the probability of whether a pixel (or voxel) is of a first class type or second class type.

2.  Apparatus according to Claim 1 wherein the means for performing a logistic discriminant analysis uses a polychotomous logistic model.

3.  Apparatus according to Claim 2 in which the means for performing a logistic discriminant analysis is combined with a Bayes allocation rule, incorporating differential prior probabilities and spatial connectivity.

4.  Apparatus according to any preceding claim in which two characteristic variables are measured in order to obtain signals indicative of a pixel (or voxel) value.

5.  Apparatus according to any preceding claim in which magnetic resonant images (MRI) are obtained.

6.  Apparatus according to Claim 5 adapted to classify grey matter, white matter and cerebro-spinal fluid (csf).

**7.** Apparatus according to any of Claims 1 to 6 having means for storing images, means for retrieving images and means for comparing two or more different images.

**8.** Apparatus according to Claim 7 having means for ensuring that co-registration of two or more images is performed so as to enable automatic comparison of the images.

**9.** A method of obtaining an image, which image comprises a plurality of pixels, the method comprising the steps of converting an image into machine-readable data such that the data is representative of the pixels in the image, according relative values to each of said data, characterised in that a logistic discriminant analysis is applied to the data such that an estimate of a logistic regression co-efficient is obtained, said logistic regression co-efficient being used to estimate the probability of whether a pixel is of a first class type or a second class type.

**10.** Method according to Claim 9 wherein the means for performing a logistic discriminant analysis uses a polychotomous logistic model.

**11.** Method according to Claim 10 in which the means for performing a logistic discriminant analysis is combined with a Bayes allocation rule, incorporating differential prior probabilities and spatial connectivity.

**12.** Method according to claims 9 to 11 in which two characteristic variables are measured in order to obtain signals indicative of a pixel value.

**13.** Method according to claims 9 to 12 in which magnetic resonant images (MRI) are obtained.

**14.** Apparatus according to Claim 6 adapted to classify grey matter, white matter and cerebro-spinal fluid (csf).


**Patentansprüche**

**1.** Vorrichtung zum Erzeugen eines Bildes, mit einer Einrichtung zum Erzeugen eines Bildes, das mehrere Pixel (oder Voxel) umfaßt, einer Einrichtung zum Umwandeln des Bildes in maschinenlesbare Daten derart, daß die Daten für die Pixel (oder Voxel) repräsentativ sind; einer Einrichtung zum Zuordnen relativer Werte zu den jeweiligen Daten; dadurch gekennzeichnet, daß eine Einrichtung vorgesehen ist, um eine logistische Diskriminanzanalyse der Daten durchzuführen, so daß Schätzungen eines logistischen Regressionskoeffizienten erhalten werden, wobei der logistische Regressionskoeffizient verwendet wird, um die Wahrscheinlichkeit abzuschätzen, ob ein Pixel (oder Voxel) vom Typ einer ersten Klasse oder vom Typ einer zweiten Klasse ist.

**2.** Vorrichtung nach Anspruch 1, worin die Einrichtung zum Durchführen einer logistischen Diskriminanzanalyse ein polychotomes bzw. vielfach unterteiltes logistisches Modell verwendet.

**3.** Vorrichtung nach Anspruch 2, worin die Einrichtung zum Durchführen einer logistischen Diskriminanzanalyse mit einer Bayes-Zuordnungsregel einschließlich differentieller a-priori-Wahrscheinlichkeiten und einer räumlichen Verbindbarkeit kombiniert ist.

**4.** Vorrichtung nach einem der vorhergehenden Ansprüche, worin zwei charakteristische Variablen gemessen werden, um Signale zu erhalten, die einen Pixelwert (oder Voxelwert) angeben.

**5.** Vorrichtung nach einem der vorhergehenden Ansprüche, worin Magnetresonanzbilder (MRI) erhalten werden.

**6.** Vorrichtung nach Anspruch 5, dafür eingerichtet, um graue Materie, weiße Materie und zerebrospinales Fluid (csf) zu klassifizieren.

**7.** Vorrichtung nach einem der Ansprüche 1 bis 6, mit einer Einrichtung zum Speichern von Bildern, einer Einrichtung zum Wiedergewinnen von Bildern und einer Einrichtung zum Vergleichen von zwei oder mehr verschiedenen Bildern.

**8.** Vorrichtung nach Anspruch 7, mit einer Einrichtung zum Sicherstellen, daß eine gemeinsame Registrierung von zwei oder mehr Bildern durchgeführt wird, um einen automatischen Vergleich der Bilder zu ermöglichen.

9. Verfahren zum Erzeugen eines Bildes, das mehrere Pixel umfaßt, wobei das Verfahren die Schritte umfaßt: Umwandeln eines Bildes in maschinenlesbare Daten derart, daß die Daten für die Pixel in dem Bild repräsentativ sind, Zuordnen relativer Werte zu den jeweiligen Daten, dadurch gekennzeichnet, daß eine logistische Diskriminanzanalyse auf die Daten angewendet wird, so daß eine Schätzung eines logistischen Regressionskoeffizienten erhalten wird, wobei der logistische Regressionskoeffizient verwendet wird, um die Wahrscheinlichkeit abzuschätzen, ob ein Pixel vom Typ einer ersten Klasse oder vom Typ einer zweiten Klasse ist.

10. Verfahren nach Anspruch 9, worin die Einrichtung zum Durchführen einer logistischen Diskriminanzanalyse ein polychotomes bzw. vielfach unterteiltes logistisches Model verwendet.

11. Verfahren nach Anspruch 10, worin die Einrichtung zum Durchführen einer logistischen Diskriminanzanalyse mit einer Bayes-Zuordnungsregel einschließlich differentieller a-priori-Wahrscheinlichkeiten und einer räumlichen Verbindbarkeit kombiniert ist.

12. Verfahren nach den Ansprüchen 9 bis 11, worin zwei charakteristische Variablen gemessen werden, um Signale zu erhalten, die einen Pixelwert angeben.

13. Verfahren nach den Ansprüchen 9 bis 12, worin Magnetresonanzbilder (MRI) erhalten werden.

14. Vorrichtung nach Anspruch 6, dafür eingerichtet, um graue Materie, weiße Materie und zerebrospinales Fluid (csf) zu klassifizieren.

## Revendications

1. Dispositif pour obtenir une image, comprenant des moyens pour obtenir une image, cette image comprenant une pluralité de pixels (ou voxels), des moyens pour convertir ladite image en données lisibles par une machine de telle sorte que les données soient représentatives desdits pixels (ou voxels) ; des moyens pour accorder des valeurs relatives à chacune desdites données ; caractérisé en ce qu'il comporte des moyens pour effectuer une analyse discriminante logistique desdites données, de telle sorte que des estimations d'un coefficient de régression logistique soient obtenues, ledit coefficient de régression logistique étant utilisé pour estimer la probabilité qu'un pixel (ou un voxel) soit d'un type d'une première classe ou d'un type d'une deuxième classe.

2. Dispositif selon la revendication 1, dans lequel les moyens pour effectuer une analyse discriminante logistique utilisent un modèle logistique polychotome.

3. Dispositif selon la revendication 2, dans lequel les moyens pour effectuer une analyse discriminante logistique sont combinés avec une règle d'affectation de Bayes, incorporant des probabilités antérieures différentielles et une connectivité spatiale.

4. Dispositif selon l'une quelconque des revendications précédentes, dans lequel deux variables caractéristiques sont mesurées pour obtenir des signaux indicatifs d'une valeur de pixel (ou de voxel).

5. Dispositif selon l'une quelconque des revendications précédentes, dans lequel des images à résonance magnétique (IRM) sont obtenues.

6. Dispositif selon la revendication 5 adapté pour classifier de la matière grise, de la matière blanche et du liquide céphalo-rachidien.

7. Dispositif selon l'une quelconque des revendications 1 à 6, comprenant des moyens pour mémoriser des images, des moyens pour extraire des images et des moyens pour comparer deux ou plusieurs images différentes.

8. Dispositif selon la revendication 7, comprenant des moyens pour garantir que le co-alignement de deux ou plusieurs images est effectué de façon à permettre une comparaison automatique des images.

9. Procédé d'obtention d'une image, cette image comprenant une pluralité de pixels, le procédé comprenant les étapes consistant à convertir une image en données lisibles par une machine de telle sorte que les données soient représentatives des pixels dans l'image, à accorder des valeurs relatives à chacune desdites données, caractérisé en ce qu'une analyse discriminante logistique est appliquée aux données de telle sorte qu'une estimation d'un coefficient de régression logistique soit obtenue, ledit coefficient de régression logistique étant utilisé pour estimer la probabilité qu'un pixel soit d'un type d'une première classe ou d'un type d'une deuxième classe.

10. Procédé selon la revendication 9, dans lequel les moyens pour effectuer une analyse discriminante logistique utilisent un modèle logistique polychotome.

11. Procédé selon la revendication 10, dans lequel les moyens pour effectuer une analyse discriminante logistique sont combinés avec une règle d'affectation de Bayes, incorporant des probabilités antérieures différentielles et une connectivité spatiale.

12. Procédé selon les revendications 9 à 11, dans lequel deux variables caractéristiques sont mesurées pour obtenir des signaux indicatifs d'une valeur de pixel.

13. Procédé selon les revendications 9 à 12, dans lequel des images de résonance magnétique (IRM) sont obtenues.

14. Dispositif selon la revendication 6, adapté pour classifier de la matière grise, de la matière blanche et du liquide céphalo-rachidien.

Fig.1b

Fig.1a

Fig. 2

# Grey

Fig 3a

## CSF

Fig. 3b

# White

Fig. 3c

Grey

Fig. 4a

# CSF

Fig. 4b

# White

Fig.4c

Fig. 5c

Fig. 5b

Fig. 5a

Fig.6b

Fig.6a

Fig. 7a

Fig. 7b

Fig. 8

Fig. 9

Fig.10